# FASCICULE DE BREVET EUROPEEN

(11) **EP 0 922 634 B1**
(45) Date de publication et mention de la délivrance du brevet: **17.09.2003**
(21) Numéro de dépôt: 98403086.6
(22) Date de dépôt: 08.12.1998
(51) Int. Cl.: B64D 43/00, G01D 11/30, G12B 5/00, G02B 27/01

(54) **Fixation d'un support d'équipement embarqué sur aéronef**
Befestigung einer Ausrüstungshalterung an Bord eines Luftfahrzeuges
Mounting for an aircraft equipment support

(30) Priorité: 12.12.1997 FR 9715778
(43) Date de publication de la demande: 16.06.1999
(73) Titulaire: THALES AVIONICS S.A., 78141 Vélizy Villacoublay Cédex (FR)
(72) Inventeur: Rambert, Thierry, Thomson-CSF P.I.D. Brevets, 94117 Arcueil Cedex (FR); Darrieux, Jean-Marc, Thomson-CSF P.I.D. Brevets, 94117 Arcueil Cedex (FR)
(74) Mandataire: Guérin, Michel

(56) Documents cités:
- EP-A- 0 123 020
- DE-A- 3 211 867

## Description

La présente invention concerne un dispositif de fixation d'un support d'équipement à bord d'un aéronef permettant un positionnement précis du support par rapport à l'aéronef.

Un aéronef comporte un grand nombre d'équipements qui sont généralement fixés individuellement et de manière amovible pour permettre notamment un démontage et un remplacement rapide d'un équipement défaillant.

La structure de l'avion peut être munie de pattes d'accrochage sur lesquelles des équipements sont par exemple vissés. Les dimensions des pattes d'accrochage et d'un équipement se correspondent dans la limite de tolérances de fabrication de l'aéronef d'une part et de l'équipement d'autre part.

Cependant les tolérances de fabrication peuvent être trop importantes pour certains équipements, comme une centrale à inertie ou un système de visualisation tête haute dont l'exploitation nécessite un positionnement très précis par rapport à l'ensemble de la structure de l'aéronef.

Un système de visualisation tête haute appelé aussi collimateur tête haute permet la présentation au pilote d'informations collimatées en superposition à son champ de vue lointain.

Un collimateur comporte un projecteur, généralement placé au-dessus de la tête du pilote et un miroir semi-transparent placé devant les yeux. Le projecteur envoie un faisceau de lumière collimatée contenant les informations sur le miroir. Le miroir est transparent pour les rayons lumineux émis par le paysage et il réfléchit vers les yeux du pilote les rayons venant du projecteur. Ainsi le pilote peut lire des informations tout en observant le paysage.

Un collimateur tête haute est utilisé en aviation civile pour l'atterrissage : il permet d'afficher une image de la piste conforme au terrain réel. La superposition de l'image avec le paysage n'est réalisée sans décalage gênant qu'avec un positionnement très précis du collimateur par rapport aux références géométriques de la structure de l'aéronef.

Ce positionnement est réalisé au cours d'une opération d'harmonisation d'un collimateur avec son aéronef porteur. L'harmonisation consiste pour un avion à le monter sur vérins, à le mettre à l'horizontale au sol, à définir des références géométriques en utilisant un appareillage optique et à régler la position du collimateur par rapport à ces références géométriques à l'aide d'une lunette de visée. Les références géométriques de l'avion sont généralement matérialisées par une cible fixée au sol, une lunette de visée est fixée sur le collimateur puis la position du collimateur est réglée jusqu'à ce que la lunette vise la cible.

L'opération d'harmonisation prend fin avec la fixation sur l'avion du collimateur en position réglée.

L'opération d'harmonisation d'un équipement avec son aéronef est longue, contraignante et coûteuse, on souhaite en éviter la répétition après chaque démontage de l'équipement. Le problème consiste à permettre le démontage et le remontage d'un équipement embarqué avec un positionnement précis.

Une solution partielle consiste à utiliser un support d'équipement. L'équipement peut être accroché et bloqué au support, il peut également en être démonté.

Le montage de l'équipement sur le support est reproductible avec une précision suffisante pour s'affranchir de l'opération d'harmonisation de l'aéronef avec l'équipement et se contenter de l'opération d'harmonisation de l'aéronef avec le support. Cette dernière est aussi lourde à réaliser que la première mais elle autorise le démontage de l'équipement, son changement et le remontage en garantissant le bon positionnement de l'équipement.

Cependant lors de certaines opérations de maintenance de l'aéronef, il est nécessaire de démonter également le support. Le problème est alors d'assurer le remontage précis du support en évitant une nouvelle opération d'harmonisation.

C'est pourquoi l'invention propose un dispositif de fixation d'un support d'équipement d'un aéronef permettant un positionnement précis du support dans l'aéronef : le dispositif selon l'invention permet le démontage du support et le remontage avec la même précision de positionnement.

Plus précisément l'invention concerne un dispositif de fixation d'un support d'équipement dans un aéronef, comportant une articulation du support selon au moins un axe de rotation, au moins un moyen de fixation, par exemple un boulon, du support sur l'aéronef permettant la fixation du support selon un angle variable autour de l'axe de rotation, un bloc de centrage coopérant avec un doigt de centrage, l'un des deux appartenant à l'aéronef et l'autre au support, le doigt étant logé de manière amovible dans une ouverture de positionnement formée dans le bloc de centrage, le bloc comprenant un godet rempli de résine, la résine servant à définir et à maintenir la position de l'ouverture par rapport au godet. Le doigt, logé étroitement dans l'ouverture de positionnement, peut sortir de celle-ci lors d'une opération de démontage du support et y rentrer lors d'une opération de remontage du support.

L'invention concerne également un procédé de fixation amovible d'un support d'équipement sur un aéronef à l'aide d'un dispositif de fixation de ce type, caractérisé en ce que lors d'une première fixation du support dans une position de référence, le godet, initialement vide, est rempli d'une résine qui, en durcissant autour du doigt de centrage, définit une position de référence pour l'ouverture de positionnement. Lors d 'un démontage et d'une nouvelle fixation, le support est remonté en plaçant le doigt de centrage dans l'ouverture.

D'autres caractéristiques et avantages de l'invention apparaîtront à la lecture de la description détaillée suivante de quelques réalisations particulières, description qui fait référence aux dessins annexés suivants.
- la figure 1 représente un collimateur tête haute monté dans un support,
- la figure 2 représente un support de collimateur tête haute et une partie d'un avion à laquelle il est fixé selon l'invention,
- la figure 3 représente un support de collimateur avec les pattes d'accrochage de l'avion et le dispositif de fixation selon l'invention,
- la figure 4 représente un détail d'une réalisation de l'invention,
- la figure 5 représente un détail d'une autre réalisation de l'invention.

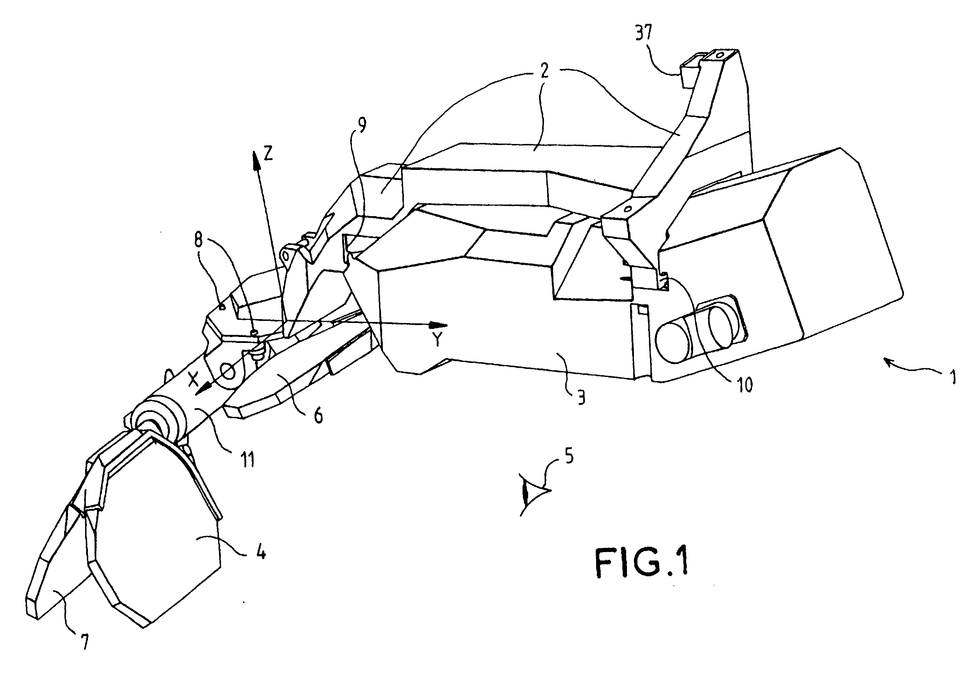

La figure 1 est une vue en perspective d'un collimateur tête haute 1 monté dans un support 2.

Le collimateur comporte un projecteur 3 et un miroir semi-transparent 4 en position d'utilisation devant l'oeil 5 de l'utilisateur.

Le miroir comporte également une position de rangement 6 pour dégager le champ de vue de l'utilisateur lorsque ce dernier n'exploite pas le collimateur, ainsi qu'une position de sécurité 7 pour dégager le visage de l'utilisateur en cas d'éjection du pilote hors de son véhicule.

Le projecteur 3 comporte un imageur sur l'écran duquel une image est formée et une optique de collimation pour focaliser l'image à l'infini c'est-à-dire dans le plan du paysage. La lumière collimatée est envoyée vers le miroir 4 qui assure pour l'utilisateur 5 la superposition de l'image avec la vue du paysage.

Le projecteur 3 et le miroir 4 sont deux éléments mécaniquement indépendants. Ils sont fixés sans jeu sur le support. Le miroir 4 est fixé par exemple au niveau de son bras 11 à l'aide de plusieurs vis 8. Le projecteur 3 est fixé à l'aide de vis. Des butées 9, 10 formées sur le support 2 facilitent le montage du projecteur en évitant d'avoir à le tenir à bout de bras pendant l'opération de vissage.

Dans cette réalisation, le support présente une unique position de maintien du collimateur.

Le support permet le démontage du collimateur par dévissage des vis 8 pour le miroir 4 et par dévissage, soulèvement et désemboîtement pour le projecteur 3.

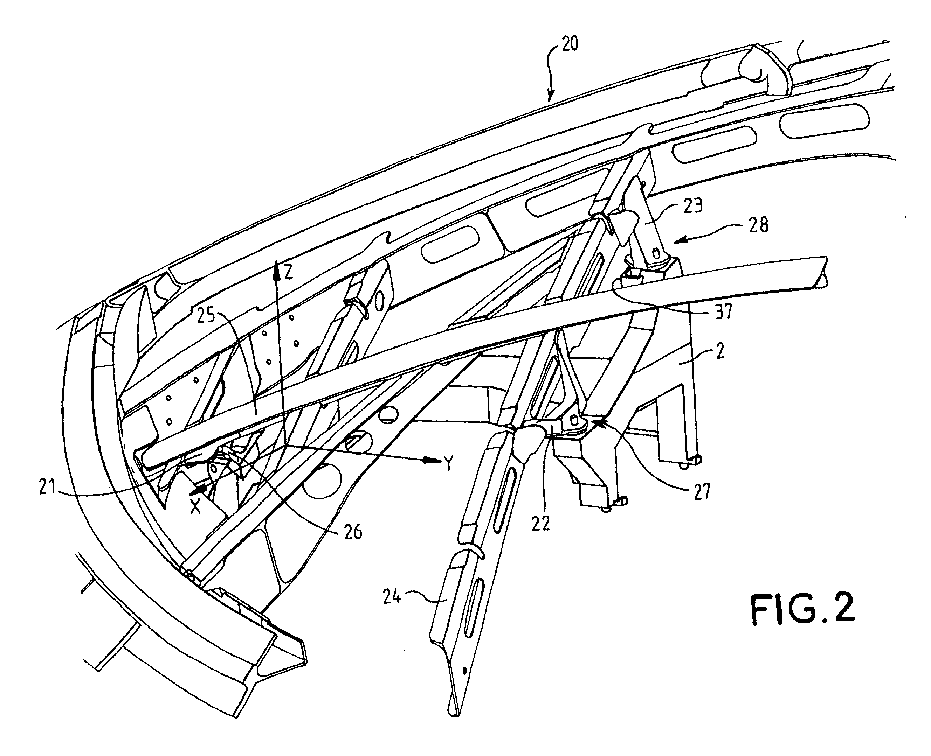

La figure 2 représente une partie de la structure 20 d'un avion, il s'agit plus particulièrement du plafond du poste de pilotage. Le support 2 de collimateur tête haute est ici représenté fixé sur la structure 20.

Dans cette réalisation, la structure 20 de l'avion présente des pattes d'accrochage 22, 23 qui sont maintenues rigidement à une poutrelle 24 de l'avion par exemple par soudure ou par rivetage. La structure 20 de l'avion présente également une patte 21 maintenue de façon rigide à une poutrelle 25.

La liaison entre la structure 20 et le support 2, semblable à celui représenté sur la figure 1, est assurée par une articulation correspondant à la patte 21 et par deux points de fixation 27, 28 correspondant respectivement aux deux pattes d'accrochage 22, 23.

L'articulation est une articulation à trois degrés de liberté en rotation et est donc de préférence réalisée au moyen d'une rotule 26 solidaire de la patte 21. La rotule 26 est de préférence sans jeu.

Les moyens de fixation 26, 27 et 28 du support dans l'avion permettent de régler la position du support par rapport à la structure de l'avion. Le réglage s'effectue par rotation autour de trois axes orthogonaux X, Y et Z de la géométrie de l'avion.

Lorsque l'articulation est réalisée par une rotule les 3 axes sont concourants au centre de celle-ci, mais cette disposition n'est pas obligatoire.

Le système de 3 axes X, Y et Z est par exemple tel que l'axe Z est sensiblement vertical et l'axe Y est perpendiculaire au plan sensiblement vertical contenant à la fois l'axe Z et les deux points de fixation 27 et 28. L'axe X est orthogonal aux axes Y et Z.

Lorsque le support 2 est fixé à l'avion par la rotule 26 et qu'il n'est pas fixé aux pattes d'accrochage 22 et 23, il ne peut pas se déplacer en translation par rapport à l'avion mais il est libre en rotation selon les trois axes X, Y et Z.

L'opération d'harmonisation du support 2 avec l'avion consiste à régler et à figer l'orientation du support par rapport aux 3 axes.

L'opération est généralement réalisée à l'aide d'une lunette de visée solidaire, le temps de l'opération, du support 2 et d'un panneau d'harmonisation solidaire de l'avion ; le panneau servant de cible pour la lunette. L'orientation du support permettant à la lunette de viser la cible est l'orientation qui permet de faire coïncider le repère géométrique des informations collimatées avec le repère géométrique de l'avion portant le collimateur. C'est l'orientation d'harmonisation. Elle correspond à une position de référence du support.

Dans cet exemple l'orientation est réglée avec une précision de 0,1 milliradian.

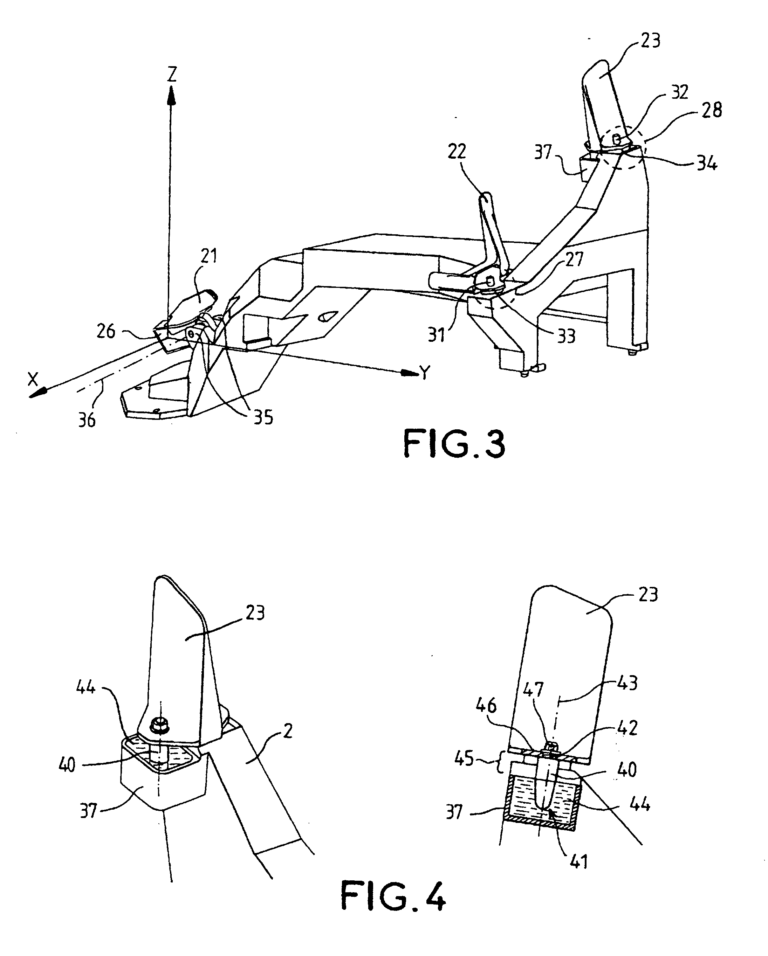

Sur la figure 3, on voit le même support 2 d'équipement mais la représentation de la structure de l'avion est très réduite ; elle est limitée à la représentation des deux pattes d'accrochage 22, 23 déjà décrites et de la patte 21 portant la rotule 26. La patte 21 est fixée rigidement à la structure de l'avion, par exemple de la même façon que la patte 22 ou la patte 23.

Sur la figure 3, on a représenté la rotule 26 solidaire de la patte d'accrochage 21 de l'avion. Le support 2 présente à ce niveau une chape 35 supportant un axe d'appui 36 de la rotule 26 qui est par exemple parallèle à l'axe X du repère des rotations. Dans ce cas la rotule est montée par l'avionneur sur l'avion et le support 2 comporte un axe d'appui 36 compatible avec la rotule fournie. Une variante de réalisation de l'invention consiste à inverser la fixation au niveau de la patte 21 par rapport à la description de la figure 3, c'est-à-dire que dans cette variante la rotule est solidaire du support 2 et l'axe d'appui est solidaire de la patte 21.

Selon l'invention les mouvements de rotation du support 2 selon les deux axes X et Y sont bloqués au niveau des points de fixation 27 et 28 du support sur les pattes correspondantes de l'avion 22, 23.

Ce blocage peut être réalisé par un mécanisme à vis réglable pour chacun des points de fixation 27, 28. Mais il est de préférence réalisé par un ensemble comportant, pour chaque point de fixation 27 ou 28, une cale 33, 34 entre la patte de l'avion 22, 23 et le support 2 et un boulon de fixation 31, 32. Le boulon 31, 32 serre le support 2 sur une première face de la cale 33, 34 et il serre à la fois une seconde face de la cale, opposée à la première, sur la patte d'accrochage 22, 23. L'écart entre la première et la seconde face d'une cale 33 ou 34 est l'épaisseur de la cale.

Une variation de l'orientation du support 2 selon la rotation suivant l'axe X se fait en augmentant d'une même quantité l'épaisseur des deux cales 33 et 34. Et une variation de l'orientation du même support 2 selon la rotation d'axe Y est réalisée par la modification de l'épaisseur de l'une des deux cales 33 et 34, ou bien par la modification des épaisseurs de ces deux cales de quantités différentes pour chacune des cales.

Dans l'exemple de support pour collimateur tête haute ici décrit, l'épaisseur de chacune des cales est comprise entre 0 et 8 millimètres.

Le boulon de fixation 31 est de préférence une vis montée avec un écrou flottant du côté de la patte d'accrochage 22. La patte 22 présente une ouverture dans laquelle passe la vis. Et au niveau du point de fixation 27, le support 2 présente un trou de préférence circulaire dans lequel la vis est fixée. La cale 33 correspondant à ce point de fixation 27 est de préférence une rondelle d'épaisseur ajustable et la vis du boulon 31 traverse la rondelle.

La rondelle ajustable peut être une rondelle pelable formée d'un matériau en couches superposées qui présente une structure en millefeuille dans l'épaisseur de la rondelle ; la réduction de l'épaisseur de la rondelle est obtenue par pelage ou enlèvement d'une ou plusieurs couches de matériau.

Le second point de fixation 28 est par exemple semblable au premier point de fixation 27.

Les ouvertures dans les pattes 22, 23 pour les points de fixation 27 et 28 sont de préférence allongées selon la direction de l'axe X. Ces ouvertures peuvent être des trous oblongs.

Ces ouvertures permettent un mouvement de rotation selon l'axe Z à partir de la rotule 26 pour le support 2 qui est lié à l'aéronef par la rotule 26 et dont les mouvements de rotation selon les axes X et Y sont bloqués à l'aide des cales 33, 34.

Selon l'invention, le support 2 comporte également un bloc de centrage coopérant avec une patte 23 de l'avion pour bloquer le mouvement de rotation du support selon l'axe Z. Ce bloc de centrage est essentiellement constitué, comme on va le voir, par un godet 37 fixé au support 2 et rempli de résine.

La figure 4 représente une vue partielle d'une réalisation particulière de l'invention. Cette vue correspond au bloc de centrage. On y voit un godet 37 que l'on peut aussi voir sur la figure 3 ; il appartient au support 2, il est ouvert sur sa face supérieure en regard d'une partie de la patte d'accrochage 23 qui est munie d'un doigt de centrage 40. Le doigt de centrage appartient à l'avion. Le doigt peut faire partie de la patte 23 mais il est de préférence constitué par une pièce distincte de la patte et fixée rigidement par l'une de ses deux extrémités à la patte 23. Sur cette première extrémité, le doigt présente par exemple un filetage 47 et un épaulement 46 qui lui permettent d'être vissé sans jeu et bloqué à la patte 23 au niveau d'une ouverture 42 de cette patte 23. Le doigt est solidaire de l'avion.

Dans cette réalisation, le doigt 40 présente une symétrie de révolution autour d'un axe longitudinal 43, le doigt est cylindrique en son centre 45 et s'affine sur sa seconde extrémité, opposée à la première extrémité décrite et qui est par exemple conique.

Le godet 37 est rempli d'une résine 44 qui présente une cavité 41 dans laquelle est logée la seconde extrémité du doigt 40. La cavité 41 est conforme à cette seconde extrémité du doigt ; lorsque le doigt de centrage y est inséré, la cavité empêche tout mouvement de rotation du support 2 autour de l'axe Z. Le godet avec sa résine et la cavité 41 forment un bloc de centrage, et la cavité 41 constitue une ouverture de positionnement coopérant avec le doigt de centrage pour définir l'orientation angulaire du support autour de l'axe Z.

L'ensemble des boulons de fixation 31, 32 et du bloc de centrage assure le maintien du support selon l'orientation d'harmonisation.

L'extrémité du doigt en contact avec la résine présente un traitement antiadhérent sur sa surface. Ce doigt est ainsi facilement dissociable de la résine 44 et le support peut être démonté facilement de l'avion en libérant les boulons de fixation 31 et 32. Le traitement antiadhérent permet de ne pas dégrader la surface de la cavité 41 en résine 44, ni celle de l'extrémité correspondante du doigt de centrage 40 lors du démontage.

La résine est une colle rigide sans retrait, ce peut être une colle polyuréthane ou de préférence une colle époxy. La résine époxy est intéressante pour sa facilité de mise en oeuvre, c'est une colle monocomposant ne nécessitant pas de préparation particulière et se présentant avant solidification sous forme liquide.

Pour réaliser le bloc de centrage, le support 2 est positionné dans l'orientation d'harmonisation, le doigt de centrage 40 de la patte 23 se trouve alors en partie dans le godet 37 du support 2. Puis une quantité de résine est versée ou injectée dans le godet ; la résine se répand dans le godet et elle entoure la seconde extrémité du doigt 40. La résine remplit dans le godet l'espace laissé libre par le doigt de centrage.

Après solidification, la résine est dure et présente une ouverture de positionnement du doigt exactement conforme au doigt. La résine est de préférence solidaire du godet, elle se lie au godet lors de la solidification. Une variante consiste à utiliser un godet dont la face intérieure présente un traitement de surface antiadhérent, la résine solidifiée est alors amovible; dans ce cas le godet présente une certaine asymétrie et la résine est ainsi replacée sans erreur d'orientation dans son godet.

Dans la réalisation de la figure 4, le godet est orienté de façon à ce que son ouverture soit à sa partie supérieure, le godet présente l'avantage de pouvoir contenir de la résine liquide par gravité.

Dans cette réalisation, on note que l'axe longitudinal 43 du doigt 40 n'est pas fortement incliné par rapport à l'axe sensiblement vertical Z, l'axe 43 est par exemple vertical, ainsi la résine versée dans le godet 37 enrobe simplement par gravité l'extrémité conique du doigt 40.

La face supérieure du godet 37 présente une ouverture assez large pour tenir compte des tolérances de fabrication d'un support 2 et de l'avion porteur. L'harmonisation d'un support avec son avion correspond à un réglage fin autour d'une position standard du support dans l'avion. La position standard correspond par exemple à centrer le doigt dans le godet ; et l'amplitude du réglage fin est limitée au maintien du doigt dans le godet. Selon l'exemplaire du support et celui de l'avion, le doigt est plus ou moins décalé par rapport au milieu de la face supérieure du godet.

Après un démontage le support peut être remonté sur l'avion en fixant le support sur la rotule 16, en réutilisant les cales ajustées 33 et 34, en plaçant le doigt de centrage dans l'ouverture de la résine et en serrant les boulons de fixation 31, 32.

Pour un boulon de fixation, le même couple de serrage est réappliqué à chaque remontage pour garantir une déformation identique de la fixation.

L'ensemble de fixation décrit permet un remontage respectant exactement l'orientation d'harmonisation initiale. Le positionnement précis du support dans l'avion est reproductible après démontage sans nouvelle opération d'harmonisation du support avec son avion.

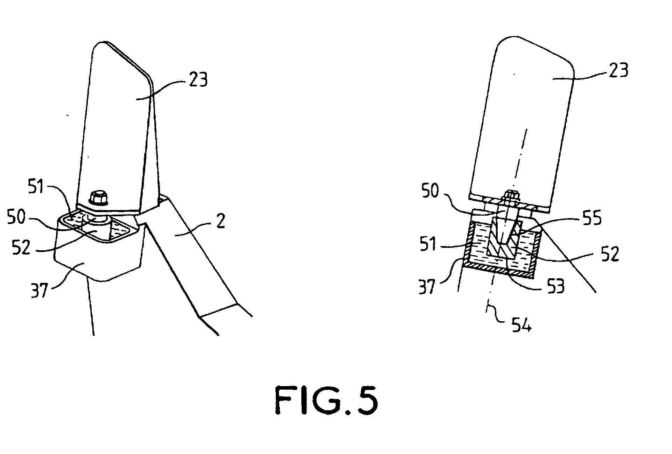

La figure 5 représente un détail d'une autre réalisation selon l'invention d'un bloc de centrage avec son doigt de centrage. Dans cette réalisation préférée, un doigt de centrage 50 est fixé rigidement à la patte d'accrochage 23 par exemple par vissage à l'aide d'un filetage et d'un épaulement comme dans la réalisation déjà décrite et illustrée par la figure 4.

On note également la présence d'un godet 37 rempli de résine 51, par exemple une résine époxy.

Le doigt 50 est logé dans une douille 52, elle-même logée dans une cavité 53 de la résine 51. La cavité 53 en résine est conforme à la partie inférieure de la surface extérieure de la douille 52.

La douille a de préférence une symétrie de révolution autour d'un axe 54, elle est par exemple cylindrique sur sa face extérieure en contact avec la résine 51 et est conique sur sa face intérieure 55 formant une cavité dans laquelle le doigt 50 est logé. La cavité présente de préférence un fond.

Le doigt présente par exemple également une symétrie de révolution autour de l'axe 54 avec un filetage à une première extrémité, une partie centrale en forme de cylindre et une seconde extrémité supportée par un cône et dont la pointe est arrondie.

Cette extrémité conique est placée dans la cavité de la douille 52. L'ensemble comportant le godet 37, la résine 51 et la douille 52 forme un bloc de centrage, et l'ouverture de la douille constitue l'ouverture de positionnement du doigt de centrage.

La douille et le doigt sont par exemple métalliques. Lorsque le support est fixé à l'aéronef, le doigt de centrage est simplement en contact avec le bloc de centrage au niveau de la surface concave 55 de la douille 52, il n'y est pas collé.

Lors du démontage du support, les fixations aux points 27 et 28 sont défaites et le bloc de centrage solidaire du support est dégagé du doigt 50 par rotation du support autour de la rotule 26.

Dans cette réalisation préférée, la douille 52 est solidaire de la résine 51.

Pour réaliser le bloc de centrage, le support 2 est positionné dans l'avion dans l'orientation d'harmonisation par exemple à l'aide d'une lunette de visée et de cibles de référence et des cales d'harmonisation 33 et 34 sont confectionnées pour bloquer l'orientation du support selon les rotations d'axes X et Y. Le support 2 est fixé à l'avion en position d'harmonisation en serrant les boulons 31 et 32. La douille 52 est maintenue, par exemple par adhérence, au doigt 50, l'ensemble douille et doigt se trouve alors situé dans le godet vide 37. Le doigt de centrage est protégé par la douille lors de la réalisation du bloc de centrage.

Le volume interne du godet est tel que la douille ne touche pas la paroi interne du godet. La position du support est par exemple réglable autour d'une position correspondant à ce que la douille protégeant le doigt soit au milieu du godet. Le support peut être réglé avec une plage de réglage limitée par les positions du support mettant la paroi interne du godet en contact avec la douille portée par le doigt. Cette plage de réglage correspond au moins aux tolérances acceptées sur la géométrie de l'avion c'est à dire aux écarts acceptés sur les positions des pattes d'accrochage 22 et 23 par rapport au repère géométrique de l'avion.

Dans la position d'harmonisation, une résine liquide est coulée dans le godet autour de la douille. La douille 52 de la figure 5 présente un fond ainsi la résine entoure la douille sur une partie importante de sa hauteur mais elle ne pénètre pas dans la cavité de la douille et n'est pas en contact avec le doigt de centrage 50. La douille est plongée partiellement dans la résine. La résine remplit l'espace libre entre la douille et le godet. La résine durcit par polymérisation. La position de la douille dans le godet est bloquée par la résine. Dans cette réalisation préférée la douille 52 est fixée dans le godet par la résine 51 : la douille, la résine et le godet sont solidaires. La cavité de la douille est résistante aux contacts et aux chocs avec le doigt 50 lors du remontage du support sur l'avion. La cavité de la douille est plus résistante que la cavité 41 en résine décrite dans la réalisation de la figure 4; par sa résistance, la fixation de la figure 5 avec l'élément supplémentaire qu'est la douille assure une meilleure reproduction du positionnement du support dans l'avion lors de remontages multiples.

Dans des variantes de la réalisation de la figure 5, la résine peut être amovible du godet, par exemple en utilisant un godet dont la face inteme est traitée antiadhérent et la douille peut aussi bien être amovible de la résine en utilisant une douille ayant subi un traitement de surface équivalent. Dans ces variantes le repositionnement correct du support dans l'avion nécessite un bon repositionnement des divers éléments amovibles, il convient de respecter l'orientation de la résine par rapport au godet qui fixe l'orientation de la douille et donc celle du support par rapport à l'avion par exemple à l'aide d'une géométrie des éléments en contact avec la résine telle que le montage de la douille dans la résine durcie et celui de la résine dans le godet ne conduisent qu'à un unique positionnement de la douille dans le godet. Ces variantes permettent pour un avion donné de changer de support en conservant les cales et la résine de positionnement. Si le nouveau support présente une bonne reproduction des caractéristiques géométriques du support ayant servi lors du réglage dans la position d'harmonisation, la position d'harmonisation est également assurée pour le nouveau support avec la réutilisation des cales et de la résine du support initial.

La fixation du support d'équipement décrite pour un collimateur tête haute est utilisable pour tout autre équipement présentant de fortes contraintes de précision sur son positionnement dans l'aéronef comme par exemple une centrale à inertie.

## Revendications

1. Dispositif de fixation d'un support (2) d'équipement dans un aéronef, comportant une articulation (26) du support selon au moins un axe de rotation (Z), au moins un moyen de fixation (31, 32) du support sur l'aéronef permettant la fixation du support selon un angle variable autour de l'axe de rotation, **caractérisé en ce qu'**il comporte un bloc de centrage coopérant avec un doigt de centrage (40), l'un des deux appartenant à l'aéronef et l'autre au support, le doigt étant logé de manière amovible dans une ouverture de positionnement (41) formée dans le bloc de centrage, le bloc comprenant un godet (37) rempli de résine (44), la résine servant à définir et à maintenir la position de l'ouverture par rapport au godet.

2. Dispositif selon la revendication 1, **caractérisé en ce que** l'articulation est une rotule (26).

3. Dispositif selon l'une des revendications 1 et 2, **caractérisé en ce que** l'ouverture de positionnement est une cavité (41) dans la résine du godet.

4. Dispositif selon la revendication 3, **caractérisé en ce que** le doigt de centrage a une surface antiadhérente.

5. Dispositif selon l'une des revendications 1 et 2, **caractérisé en ce que** le dispositif comporte une douille (52) servant d'ouverture de positionnement (55) du doigt de centrage, cette douille étant plongée dans la résine.

6. Dispositif selon la revendication 5, **caractérisé en ce que** la douille est métallique.

7. Dispositif selon l'une des revendications précédentes **caractérisé en ce que** le bloc de centrage appartient au support et que le doigt de centrage appartient à l'aéronef.

8. Dispositif selon l'une des revendications précédentes **caractérisé en ce que** la résine est une résine époxy.

9. Dispositif selon l'une des revendications précédentes **caractérisé en ce que** le support est mobile en rotation dans l'aéronef selon trois axes orthogonaux (X, Y, Z) et qu'il comporte des moyens de bloquer le mouvement de rotation du support selon deux de ces axes (X, Y), le blocage selon l'axe restant étant réalisé par le logement du doigt de centrage dans le bloc de positionnement.

10. Dispositif selon la revendication 9 **caractérisé en ce que** le blocage du mouvement selon deux des axes (X, Y) est réalisé à l'aide de boulons et de cales de réglage du support avec l'aéronef.

11. Procédé de fixation amovible d'un support d'équipement sur un aéronef à l'aide d'un dispositif de fixation selon l'une des revendications précédentes, **caractérisé en ce que**, lors d'une première fixation du support dans une position de référence, le godet (37), initialement vide, est rempli d'une résine qui, en durcissant autour du doigt de centrage, définit une position de référence pour l'ouverture de positionnement.

12. Procédé de fixation amovible selon la revendication 11 **caractérisé en ce que** la résine est coulée dans l'espace du godet laissé libre par le doigt de centrage (40).

13. Procédé de fixation selon la revendication 11 **caractérisé en ce que** la résine est coulée dans l'espace du godet laissé libre par le doigt de centrage (50) protégé par la douille (52).

## Patentansprüche

1. Vorrichtung zur Befestigung eines Trägers (2) für Geräte in einem Flugzeug mit einer gelenkigen Befestigung (26) des Trägers um mindestens eine Drehachse (Z), wobei mindestens ein Befestigungsmittel (31, 32) für den Träger am Flugzeug die Befestigung des Trägers gemäß einem variablen Winkel um die Drehachse erlaubt, **dadurch gekennzeichnet, daß** sie einen Zentrierblock enthält, der mit einem Zentrierfinger 40 zusammenwirkt, wobei eines dieser beiden Elemente zum Flugzeug und das andere zum Träger gehört, und daß der Finger lösbar in einer Positionieröffnung (41) liegt, die im Zentrierblock ausgebildet ist, und der Zentrierblock einen mit Harz (44) gefüllten Becher (37) enthält, wobei das Harz zur Definition und zur Sicherung der Position der Öffnung bezüglich des Bechers dient.

2. Vorrichtung nach Anspruch 1, **dadurch gekennzeichnet, daß** die Gelenkverbindung eine Kugelkupplung (26) ist.

3. Vorrichtung nach einem der Ansprüche 1 und 2, **dadurch gekennzeichnet, daß** die Positionieröffnung ein Hohlraum (41) in dem Harz des Bechers ist.

4. Vorrichtung nach Anspruch 3, **dadurch gekennzeichnet, daß** der Zentrierfinger eine haftmindernde Oberfläche besitzt.

5. Vorrichtung nach einem der Ansprüche 1 und 2, **dadurch gekennzeichnet, daß** die Vorrichtung eine Buchse (52) besitzt, die als Positionieröffnung (55) für den Zentrierfinger dient und in das Harz eingebettet ist.

6. Vorrichtung nach Anspruch 5, **dadurch gekennzeichnet, daß** die Buchse aus Metall ist.

7. Vorrichtung nach einem der vorstehenden Ansprüche, **dadurch gekennzeichnet, daß** der Zentrierblock Teil des Trägers und daß der Zentrierfinger Teil des Flugzeugs ist.

8. Vorrichtung nach einem der vorstehenden Ansprüche, **dadurch gekennzeichnet, daß** das Harz ein Epoxyharz ist.

9. Vorrichtung nach einem der vorstehenden Ansprüche, **dadurch gekennzeichnet, daß** der Träger in Drehrichtung im Flugzeug gemäß drei zueinander senkrecht stehenden Achsen (X, Y, Z) beweglich ist und Mittel zum Blockieren der Drehbewegung des Trägers gemäß zwei dieser Achsen (X, Y) besitzt, während die Blockierung bezüglich der verbleibenden Achse durch den Sitz des Zentrierfingers im Positionierblock realisiert wird.

10. Vorrichtung nach Anspruch 9, **dadurch gekennzeichnet, daß** die Blockierung der Bewegung bezüglich zwei der Achse (X, Y) mithilfe von Bolzen und regelbaren Distanzstücken für den Träger bezüglich des Flugzeugs erfolgt.

11. Verfahren zur lösbaren Befestigung eines Trägers für ein Gerät an einem Flugzeug mithilfe einer Befestigungsvorrichtung gemäß einem der vorstehenden Ansprüche, **dadurch gekennzeichnet, daß** bei einer ersten Befestigung des Trägers in einer Bezugsposition der ursprünglich leere Becher (37) mit einem Harz gefüllt wird, das nach dem Aushärten um den Zentrierfinger herum eine Bezugsposition für die Positionieröffnung definiert.

12. Verfahren zur lösbaren Befestigung nach Anspruch 11, **dadurch gekennzeichnet, daß** das Harz in den vom Zentrierfinger (40) freigelassenen Raum des Bechers gegossen wird.

13. Verfahren zur Befestigung nach Anspruch 11, **dadurch gekennzeichnet, daß** das Harz in den Raum gegossen wird, der vom durch die Buchse (52) geschützten Zentrierfinger (50) freigelassen wird.

## Claims

1. Device for fixing an equipment support (2) in an aircraft, comprising an articulation (26) of the support about at least one axis of rotation (Z), at least one means (31, 32) of fixing the support to the aircraft allowing the support to be fixed at a variable angle about the axis of rotation, **characterized in that** it comprises a centring block collaborating with a centring finger (40), one of the two belonging to the aircraft and the other to the support, the finger being housed removably in a positioning opening (41) formed in the centring block, the block comprising a bucket (37) filled with resin (44), the resin serving to define and to maintain the opening position with respect to the bucket.

2. Device according to Claim 1, **characterized in that** the articulation is a ball joint (26).

3. Device according to either of Claims 1 and 2, **characterized in that** the positioning opening is a cavity (41) in the resin of the bucket.

4. Device according to Claim 3, **characterized in that** the centring finger has a non-stick surface.

5. Device according to either of Claims 1 and 2, **characterized in that** the device comprises a socket (52) serving as a positioning opening (55) for the centring finger, this socket being immersed in the resin.

6. Device according to Claim 5, **characterized in that** the socket is made of metal.

7. Device according to one of the preceding claims, **characterized in that** the centring block belongs to the support and that the centring finger belongs to the aircraft.

8. Device according to one of the preceding claims, **characterized in that** the resin is an epoxy resin.

9. Device according to one of the preceding claims, **characterized in that** the support can move in rotation in the aircraft about three orthogonal axes (X, Y, Z) and **in that** it comprises means for preventing the rotational movement of the support about two of these axes (X, Y), immobilization about the remaining axis being performed by the housing of the centring finger in the positioning block.

10. Device according to Claim 9, **characterized in that** the movement is immobilized about two of the axes (X, Y) using bolts and shims for adjustment of the support with the aircraft.

11. Method for removably fixing an equipment support to an aircraft using a fixing device according to one of the preceding claims, **characterized in that**, during initial fixing of the support in a reference position, the bucket (37), initially empty, is filled with a resin which, as it cures around the centring finger, defines a reference position for the positioning opening.

12. Removable fixing method according to Claim 11, **characterized in that** the resin is poured into the space in the bucket left empty by the centring finger (40) .

13. Fixing method according to Claim 11, **characterized in that** the resin is poured into the space of the bucket left empty by the centring finger (50) protected by the socket (52).
